# NEW EUROPEAN PATENT SPECIFICATION

(11) **EP 2 151 642 B2**
(45) Date of publication and mention of the opposition decision: **31.07.2019**
(45) Mention of the grant of the patent: 20.05.2015
(21) Application number: 09013161.6
(22) Date of filing: 28.05.2004
(51) Int. Cl.: F24J 2/46

(54) **Solar collector**
Sonnenkollektor
Capteur solaire

(30) Priority: 13.06.2003 DK 200300888
(43) Date of publication of application: 10.02.2010
(62) Divisional of application: 04739443.2
(73) Proprietor: VKR Holding A/S, 2970 Hørsholm (DK)
(72) Inventor: Møller, Brent, 2820 Gentofte (DK)
(74) Representative: Nordic Patent Service A/S

(56) References cited:
- EP-A- 0 877 214
- EP-A- 0 979 981
- EP-A- 1 271 070
- EP-A- 1 284 395
- WO-A-00/03185
- DE-A1- 2 650 143
- DE-A1- 4 002 892
- DE-A1- 10 157 528
- DE-U- 20 111 962
- DE-U1- 20 219 221
- DE-U1- 29 808 386
- GB-A- 2 142 951
- US-A- 3 866 285
- US-A- 4 098 265
- US-A- 4 132 220
- US-A- 4 141 339
- US-A- 5 596 981

## Description

### SOLAR COLLECTOR

The present invention relates to glazed solar collectors and methods for producing such collectors. Such solar collectors typically have a rectangular frame containing an absorber, an insulating layer beneath the absorber, and a cover pane spaced above the absorber. The collectors can be integrated or roof mounted on a pitched roof, or may be installed on a flat roof by means of a mounting frame.

### BACKGROUND ART

The Sunwise® series solar collector sold and manufactured by SunEarth Inc. is a glazed flat plate solar collector with a rigid foam insulating layer beneath and in surrounding relation to the copper plate absorber. The insulating layer is placed in a frame build from aluminum extrusions that form sidewalls and a textured aluminum backsheet. The sidewalls are assembled by riveting to create a rectangular frame. The backsheet fits into a slot in the frame and is pop-riveted to the sides and thus a stable container is provided. The insulating layer is placed in the frame and the absorber is mounted in a recess in the upper side of the insulation layer.

A cover pane is fitted onto a retainer ledge in the frame with a high-temperature continuous EPDM U-shaped neoprene gasket to thermally isolate the cover pane from the frame. A removable aluminum cap stripping is then secured to the frame with stainless steel screws. A continuous silicon seal between the cover pane and frame capstrip is applied to minimize moisture from entering the casing.

This prior art construction is relatively labor intensive to assemble. Extruded aluminum profiles are also relatively expensive material and require extensive tooling. Another issue with the above construction is stress created by the difference in coefficient of thermal linear expansion between aluminum and glass. Tempered glass has a coefficient of thermal expansion of about 9.0 x 10-6 1/K whereas aluminum has a coefficient of thermal expansion of 20.4-25.0 x 10-6/K. Solar connectors operate over a wide temperature range that may span from minus 20 °C (winter night) to well above 200 °C in stagnation. In a collector with a span of 2 meters the difference in linear expansion between the aluminum and the glass can be several millimeter. The silicon seal between the cover pane and frame capstrip can compensate for some of the expansion difference, but has not proven to be satisfactory under all circumstances, e.g. there have been reported leakage problems with the above type of solar collectors.

DE 26 50 143 discloses a solar collector with a cover pane, a frame with side panels surrounding an insulating layer and the side panels are provided with outwardly directed ledges. The cover pane is firmly connected to the ledges by an adhesive layer.

This construction will be exposed to high mechanical stress if the collector is subjected to a wide span of operating temperatures since there is no means for compensating for differences in thermal expansion of the frame material and the cover pane material.

EP 1 271 070 discloses an absorber for a heat exchanger comprises an absorption plate, several heat exchange pipes of a heat exchange medium between the plates and plastic riveted joints. The cover pane is supported by an outwardly directed ledge and the cover pane is secured to the frame by two adhesive beads.

This construction will be exposed to mechanical stress if the collector is subjected to a wide span of operating temperatures since there is no means for compensating for differences in thermal expansion of the frame material and the cover pane material.

### DISCLOSURE OF THE INVENTION

On this background, it is an object of the present invention to provide a well sealed and relatively inexpensive to manufacture solar collector that can operate in a vast temperature range without problems related to differences in thermal expansion of the frame material and the cover pane material.

This object is achieved in accordance with claim 1. The moisture barrier is effective since it is a two stage barrier and there will under normal circumstances never be a stressing continuous water pressure on the barriers because the barriers are arranged under the cover pane and water retaining components e.g. capstrips that protrude above the cover pane are not required in this construction. The upstanding rim with the continuous gasket also acts as a spacer for keeping a distance between the cover pane and the ledge when the flexible adhesive sealant is applied. The continuous gasket also acts as a dam for the adhesive sealant when is applied.

The continuous gasket can be provided on its outwardly facing side with a flexible dam to define a hollow space between the rim and the flexible dam itself, thereby ensuring that the flexible adhesive layer has space to move.

The continuous layer of flexible adhesive sealant may occupy the space between the ledge and the cover pane up to the flexible dam.

The continuous gasket can be in sealing abutment with the first peripheral zone of the bottom surface of the cover pane to form a moisture barrier protecting the enclosure and to insulate the cover pane thermally from the side panels.

The continuous layer of flexible adhesive sealant can form a flexible layer that securely attaches the cover pane to the side panels and also forms a second moisture barrier protecting the enclosure.

The layer of flexible adhesive sealant can attach the cover pane to the side panels so that the cover pane becomes an integral bearing part of the construction that contributes to the overall stability and stiffness of the solar collector.

The combination of the continuous gasket and the continuous layer of flexible adhesive sealant can form a two stage barrier against undesired ingress.

The continuous gasket can be provided on its inwardly facing side with a flap extending over the insulation layer and under the absorber.

The flexible dam can serve as a barrier preventing liquid flexible adhesive sealant from entering the cavity when the layer of flexible adhesive is applied in liquid form during construction of the solar collector.

Shear deformation of the layer of flexible adhesive sealant can compensate for differences in thermal expansion between the cover pane and the frame.

The layer of flexible adhesive sealant can have a substantial height to allow substantial displacement between the frame and the cover pane due to difference in coefficient of linear expansion.

Further objects, features, advantages and properties of the solar collectors and methods of producing a solar collector according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 is a cutaway perspective view of a solar collector according to the invention,
Figs. 2a to 2c are partial cross-sectional views of the solar collector of Fig. 1 at different temperatures,
Figs. 3a and 3b show a partial cutaway perspective views of a solar collector according provided with embedded attachment and support elements,
Fig. 4 shows a three side view of a sheet metal frame in a production stage,
Fig. 5 shows a perspective view on a mold for use with a method according to the invention,
Figs. 6 and 7 are cross-sectional views of two further preferred embodiments of solar collector according to the invention,
Fig. 8 is a cross-sectional view of another embodiment of the invention,
Fig. 9 is a cross-sectional view of yet another embodiment of the invention,
Figs. 10a, 10c and 10b are perspective cutaway views of variations of the embodiments shown in Figs. 8 and 9,
Figs. 11a, 11b, 11c, 11d and 11e show a detail of a bracket for use in the solar collector according to any of the embodiments.

### DETAILED DESCRIPTION

The preferred embodiment of the invention will be described specifically with reference to a flat plate collector assembly although it is understood that other absorber types may be employed with a minimum change in construction.

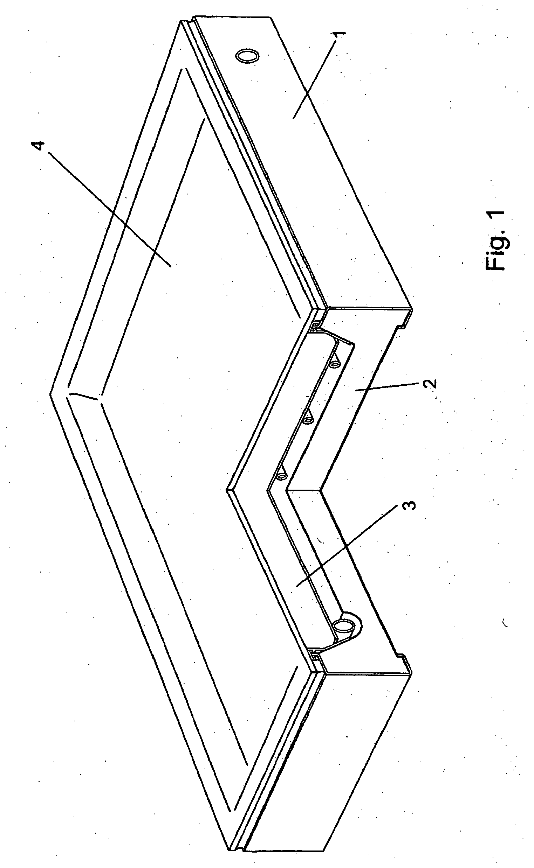

Fig. 1 shows by way of illustrative example a flat plate solar energy collector. Seen in cutaway perspective view of Fig. 1 the solar collector has a frame 1, insulation layer 2, absorber plate 3 and cover pane 4. The frame, the insulation layer and the cover pane form a case with an enclosure. The enclosure is used to provide support for the absorber, and to protect the collector from heat loss due to wind, plus the important function of keeping moisture from train, snow and dew out of the collector.

The insulation layer 2 is made of a rigid foam urethane (PUR) or polyisocyanurate (PIR). These materials have an excellent insulation value per unit of thickness and are easy to handle because they are very light. They have also a higher compression resistance than e.g. mineral wool based insulation materials.

The upper surface of the insulation layer 2 is covered with a reflective silver foil and provided with a recess sized to be able to receive the absorber 3. The absorber 3 is received in the in the recess and except for its upper side surrounded by the insulation layer 2.

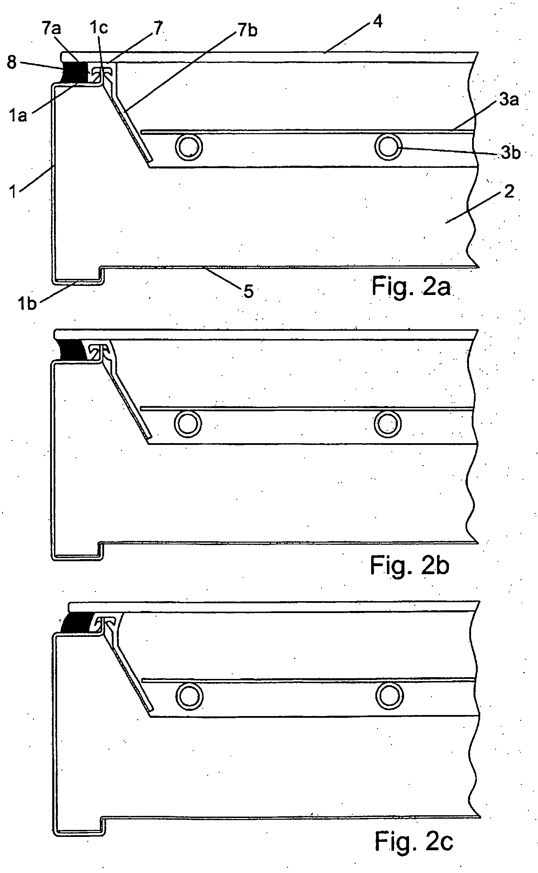

As shown in Fig. 2a the absorber comprises an absorber plate 3a and an absorber tubing 3b that channels the medium, typically water, used to transport the collected thermal energy. The absorber plate 3a and the copper tubing 3b may suitably consist of steel, copper or aluminum sheet or tubing, respectively. The absorber plate 3a and tubing 3b penetrating the case are thermally insulated from the case at all points of support, e.g. with high-temperature round EPDM neoprene gaskets.

The absorber plate 3a is provided with a semi-selective or a selective coating to improve the heat absorbing capacity of the absorber plate 3a.

The solar collector may also be provided with a backsheet 5 to protect the insulation layer 2 from weather influences and to further increase the rigidity of the construction. The backsheet is suitably formed by a plastic sheet or film material weaker than the frame material, e.g. polypropylene sheet or aluminum foil. A backsheet can be altogether avoided if the bottom side of the insulation layer is coated.

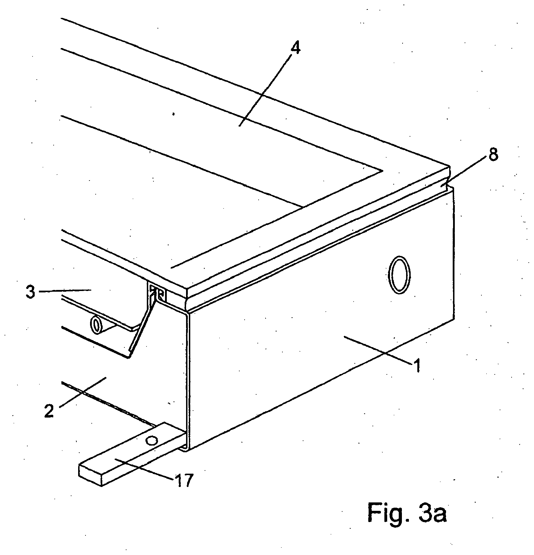

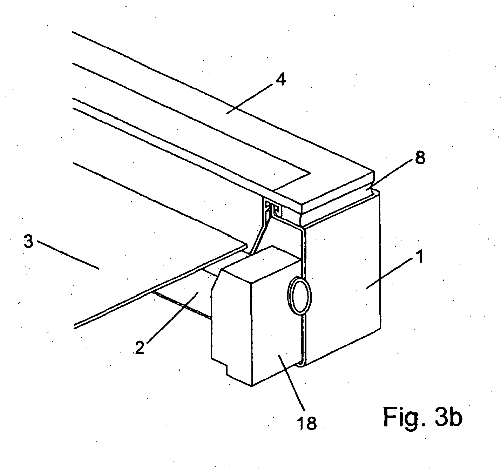

Figs. 3a and 3b show how a jacknut 17, tube support 18 or other fixtures can be provided on the inside of the outer frame for facilitating the affixation of the solar collector to a roof construction or for facilitating the connections of the tubing.

An important aspect of the invention resides in the construction and arrangement of the outer frame 1. The outer frame 1 comprises four side panels that are part of one rollformed sheet material profile. The sheet material is suitably made of sheet metal, preferably pre-painted aluminum.

The side panels 1 are substantially shaped as a U-profile with an upper inwardly directed ledge 1a and a lower inwardly directed ledge 1b. The upper ledge 1a is provided with an upstanding rim 1c.

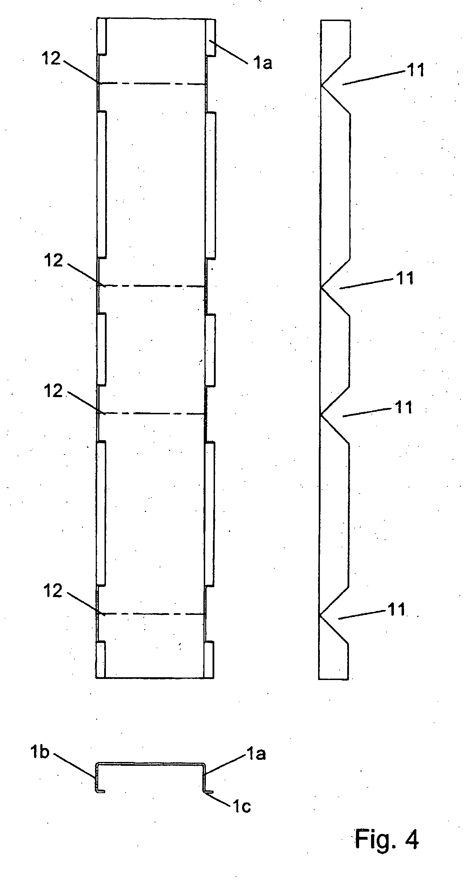

The sheet material profile in a state before assembly is shown in more detail in Fig. 4. The U-profile is notched at four sites 11 so that the U-profile can be bent along folding lines 12 and the free longitudinal ends of the U-profile are connected by welding to form a closed rectangular frame.

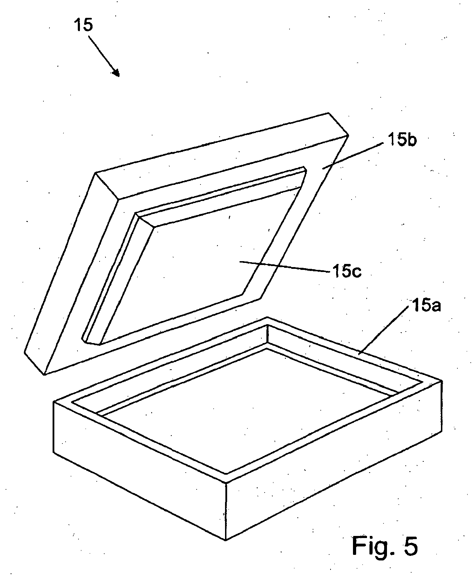

With reference to Fig. 5, the rectangular frame, together with a reflective foil and eventually with a loose backsheet 5, jacknuts 17 and tube support 18 are placed in a lower mold half 15a for producing the solar collector.

The lower mold half 15a is provided with a recess with contours that correspond to the outer contours of the frame and the bottom side of the insulation layer 2. The mold 15 is closed by an upper mold half 15b that is provided with a protrusion 15c with contours that correspond to the contours of the recess in the upper surface of the insulation layer 2. Then, liquid plastic foam such a PUR or PIR is injected into the mold 15. When the foam has hardened the mold 15 is opened and the assembly of the frame and the insulation layer 2 with the reflective foil and eventually a backsheet 5 is removed from the mold.

The during the molding procedure the insulation layer has attached itself to the inner surfaces of the rectangular frame and to the inserts 17,18. The inside surfaces of the side panels 1 adhere thus to the insulation layer 2. The side panels 1 on their own are relatively thin and buckle sensitive. The rigid foam insulation layer is however a relatively stable body preventing the side panels from buckling under load. By adhering the side panels 1 to the periphery of the insulation 2, the warp resistance of the assembly is significantly improved because the insulation layer is an integral bearing part of the construction that contributes to the overall stability and stiffness of the solar collector.

The upstanding rim 1c acts as a spacer that supports the cover pane 4 and maintains a distance between the upper surface of ledge 1a and the bottom surface of the cover pane 4 during fitting of the cover pane. A continuous EPDM neoprene gasket 7 is placed on the upstanding rims 1c. The gasket 7 is in sealing abutment with a peripheral zone of the bottom surface of the cover pane 4 to form a moisture barrier protecting the enclosure and to insulate the cover pane 4 thermally from the side panels 1.

The gasket is provided on its outwardly facing side with a flexible dam 7a. The flexible dam 7a is arranged to define a hollow space between the rim and the dam itself. The hollow space allows the flexible dam to move unhindered. The gasket is provided on its inwardly facing side with a flap 7b extending over the insulation layer and under the absorber 3. The flap protects the silver foil and the insulation layer from the sides of the absorber plate 3a.

When the gasket has been placed on the rim 1c, the cover pane 4 is placed on top of the gasket 7 and the space between the upper side of the ledge 1a and the bottom surface of the cover pane 4 is filled with a flexible adhesive sealant such as a silicone based sealant in liquid form. The flexible dam 7a serves as a barrier preventing the liquid flexible adhesive sealant from entering the cavity when it is applied.

When the sealant has cured it forms a flexible layer that securely attaches the cover pane 4 to the side panels. The layer of flexible adhesive sealant also forms a second moisture barrier protecting the enclosure. The enclosure is thus protected from moisture by a two-stage barrier, thus, reducing the likeliness of leakage significantly.

The layer of flexible adhesive sealant attaches the cover pane 4 to the side panels so that the cover pane 4 becomes an integral bearing part of the construction that contributes to the overall stability and stiffness of the solar collector. There is therefore no need for capstrips and thus there is no risk of water or snow to remain caught at the transition between the cover pane and the capstrip.

Fig. 2a illustrates the cross-section of the solar collector at room temperature. Since this is the temperature at which the cover pane was fitted to the frame there are no discrepancies in length between the aluminum frame and the tempered glass cover pane.

Fig. 2b illustrates the cross-section of the solar collector at a high temperature such as may e.g. occur during stagnation, i.e. when the heat transporting medium is not flowing so that the heat is not transported away. The cover pane has expanded more than the frame with the temperature raise. The difference in length is compensated for by an outwardly directed shear deformation of the layer of flexible adhesive sealant 8.

Fig. 2c illustrates the cross-section of the solar collector at a low temperature such as may e.g. occur in a cold winter night. The cover pane has contracted more than the frame with the temperature fall. The difference in length is compensated for by an inwardly directed shear deformation of the layer of flexible adhesive sealant 8.

Flexible adhesive sealants such as silicon based sealant can well endure such deformation and still maintain good adhesion to the cover pane and the frame both at low and high temperatures. Because of the low elasticity modus of the flexible adhesive sealant the shear forces acting on the cover pane and the frame are negligible.

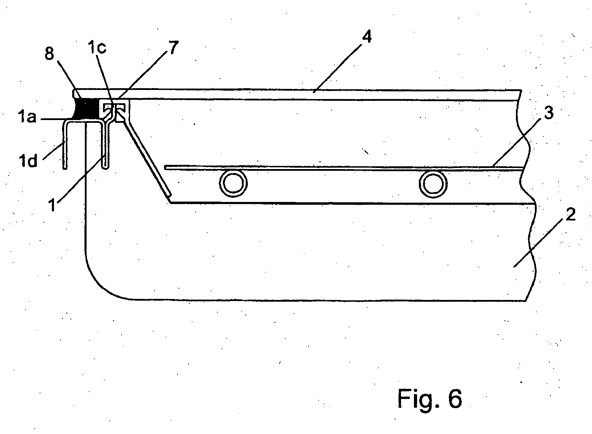

The solar collector illustrated in Fig. 6 according to a further preferred embodiment of the invention is particularly suitable for integrated roof mounting. The solar collector comprises an insulation layer 2 of rigid polymeric foam. The upper surface of the insulation layer 2 is provided with a recess and is covered with a heat reflective metal foil to reduce the heat load on the insulation material. An absorber 3 with corresponding tubing is placed in the recess in the insulation layer 2.

The outer frame is made from rollformed aluminum sheet and is adjusted to integrated roof mounting on a flashing of the roof construction by directing the ledge 1a outward and ending it in a downward rim 1d. The ledge 1a and the downward rim 1d fit over the flashing (not shown) on the roof construction to obtain a watertight construction. The outer frame comprises an upstanding rim 1c to space the cover pane from the ledge 1a during fitting of the cover panc.

The sides of the outer frame panels 1 are embedded in the rigid foam insulation layer 2 in order to support the side panel 1 against buckling and to render the insulation layer 2 an integral bearing part of the solar collector construction. The outer frame is provided with a spacer 1c provided with a gasket 7 identical with the spacer 1c described above with reference to Figs. 1 to 4. The cover pane 4 is attached to the outer frame 1 by applying a liquid flexible adhesive sealant as described above. Because the solar collector according to this preferred embodiment is intended for integral roof mounting, no outer protection for the insulation layer 2 in the form of a backsheet or outer side walls is provided. The overall construction is therefore light and material saving.

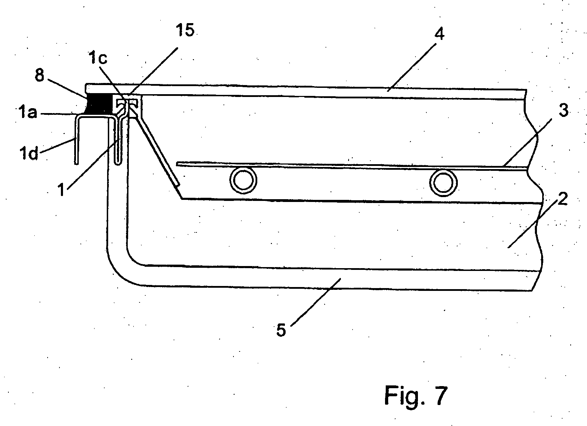

Fig. 7 shows an embodiment that is similar to the embodiment of Fig. 6, apart from the provision of a protective casing 5 below and in surrounding relation to the insulation layer 2. In certain circumstances it is namely of advantage to provide the insulation layer 2 with a protection from environmentally produced damaging effects and from jolts and impacts during transport and mounting. The casing 5 is made from an impact resistant moldable material, e.g. a material having a substantial wood fiber content. The casing has a bottom panel and upstanding side walls that surround the insulation layer 2. The side walls 1 of the outer frame are embedded in the upright walls of the casing 5. The outer frame and the casing 5 thus become one integral bearing structure that is light and easy to manufacture.

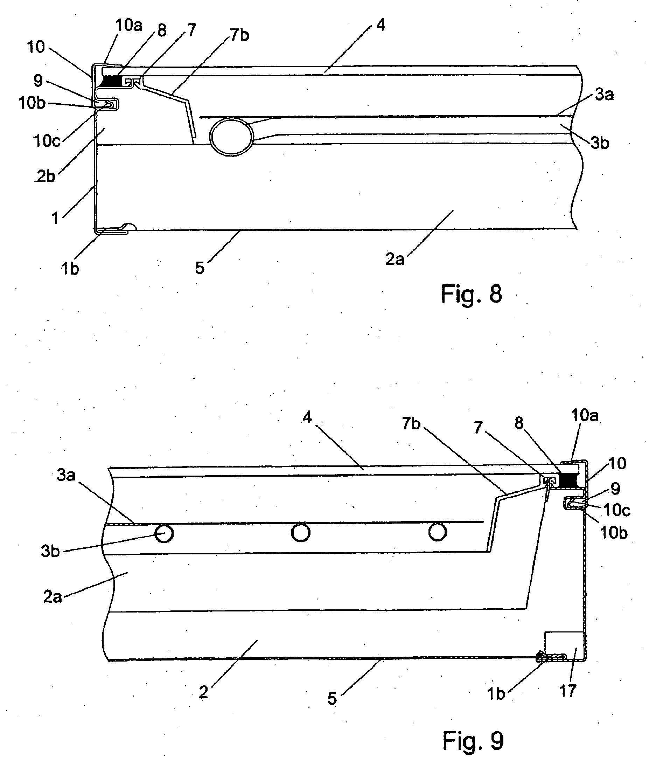

Fig. 8 illustrates a further preferred embodiment of the invention in cross-section. The collector comprises like the previously described embodiments an absorber with an absorber plate 3a and an absorber tubing 3b that channels the medium, typically water, used to transport the collected thermal energy.

The rigid foam insulation layer 2 is replaced with a heat resistant insulation layer 2a,2b and the upper surface is covered with a reflective silver foil. The heat resistant insulation layer is made from e.g. mineral wool or glass wool. The heat resistant insulation layer does not adhere to the inner walls of the casing 5. The heat resistant insulation layer comprises a bottom mat 2a below the absorber 3 and a circumferential dam 2b surrounding the absorber and supporting the flap 7b.

Fig. 9 illustrates another preferred embodiment of the invention in cross-section. The collector comprises like the previously described embodiments an absorber with an absorber plate 3a and an absorber tubing 3b that channels the medium, typically water, used to transport the collected thermal energy.

The rigid foam layer 2, is supplemented with a heat resistant insulation layer 2a there above. The upper surface of the heat resistant insulation layer 2a is covered with a silver foil. The heat resistant insulation layer 2a is made from e.g. mineral wool a glass wool and protects the rigid foam layer 2 from the heat of the absorber to prevent deterioration of the rigid foam layer 2. The commercially available rigid foams, such as PUR, deteriorate relatively quick is exposed to temperatures above 150°, a temperature that part of the insulation layer close to the absorber may well reach.

The embodiments of Figs. 8 and 9 have coincidentally been illustrated in combination with protective stripping 10, but they could just as well be realized without the protective stripping 10.

In both Fig. 8 and Fig. 9 the cover pane 4 is connected to the outer frame 1 by a silicon layer 8. The outer frame 1 is almost identical to the outer frame described in detail with reference to Figs. 1 to 7. Apart from the earlier described features, the preferably rollformed frame. 1 is further provided with a circumferential groove 9. The groove 9 is formed by folds in the side panel and serves to increase the rigidity of the overall structure and to receive a ledge 10b of a protective stripping 10.

The protective stripping 10 has a substantially U-shaped profile, with a top ledge 10a covering the upper edge of the glass pane 4 and a lower ledge 10b inserted in the groove 9. The lower ledge 10b is folded over to form an arresting lip 10c. The tip of the arresting lip 10c engages the inner upper surface of the groove 9 and thereby secures the protective stripping 10 to the frame 1. The top ledge 10a is slightly sloping downwards towards the cover pane 4 so that only its tip abuts with the cover pane 4, thus avoiding that water can get trapped between the ledge 10a and the cover pane 4.

The protective stripping has several functions.

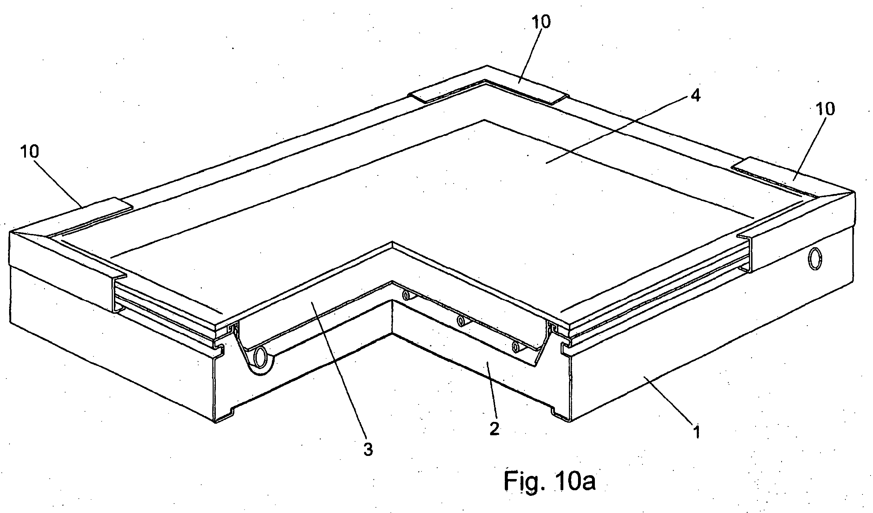

When the protective stripping 10 is only placed on the corners of the frame 1, as shown in Fig. 10a, the protective stripping 10 forms a redundant means of securing the cover pane 4 to the frame 1 that will prevent the cover pane 4 from falling should the silicon connection 8 between the frame 1 and the cover pane 4 against expectations ever fail.

The cover pane 4 is in all the described embodiments preferably made from tempered glass, i.e. a strong and durable glass quality. However, the edges of the pane are particularly sensitive to mechanical impact and could be damaged by objects hitting the edge (e.g. hailstones), leading to a chipped or cracked cover pane.

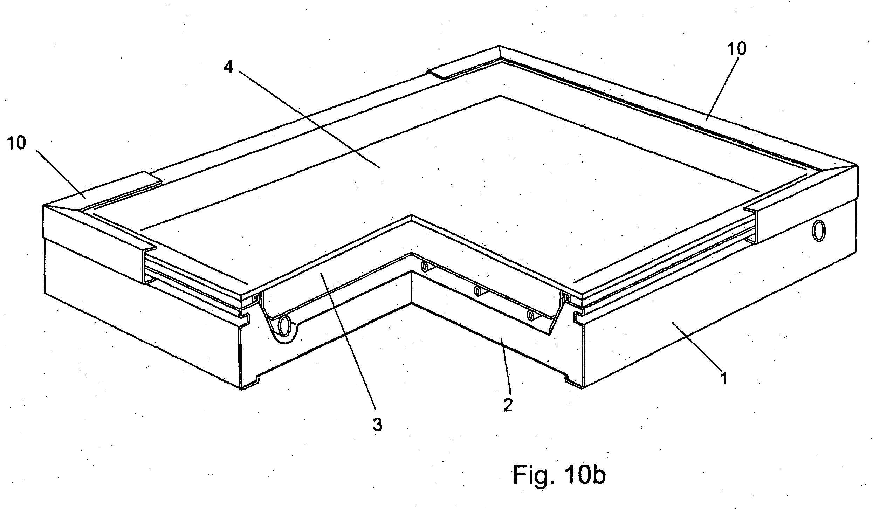

When the protective stripping 10 is placed over at least one side of the edge of the cover pane 4 and on the remaining corners of the frame 1 as shown in Fig. 10b, the protective stripping 10 also forms a protection of the cover pane 4 from mechanical impact. The side of the collector with the "protected" edge is preferably the "upper" edge when the collector is mounted on a sloping roof.

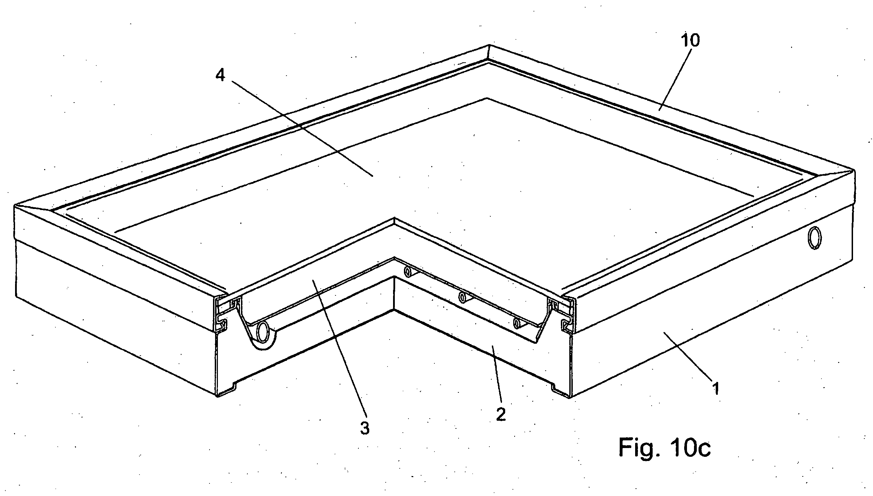

When the protective stripping 10 is placed all around the cover pane 4 as shown in Fig. 10c, the protective stripping 10 forms an even better protection from mechanical impact and serves to protect the silicon layer 8 from weather influences such as moist and direct sunlight. A ventilation space is provided between the protective stripping 10 and the silicon layer 8.

The protective stripping 10 can be applied not only to the embodiments in which it is shown, but also to the embodiments shown in Figs. 1 to 7.

The solar collector according to the embodiments of Figs. 8,9,10a,10b,10c may also be provided with a backsheet 5. The backsheet 5 is received in a fold in the internally directed ledge 1b and fixed thereto by rivets (not shown). The backsheet 5 is suitably formed by a plastic sheet or film material weaker than the frame material, e.g. polypropylene sheet or aluminum foil.

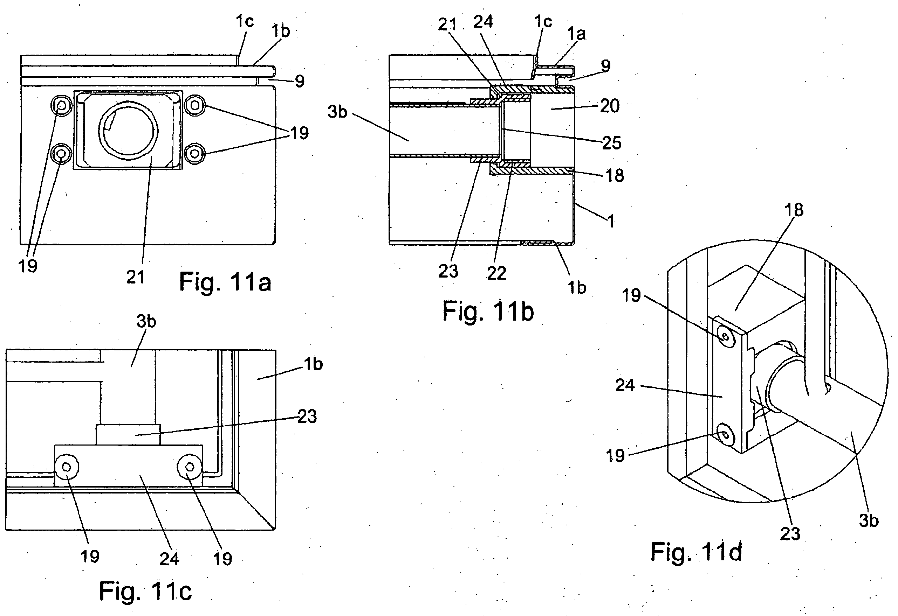

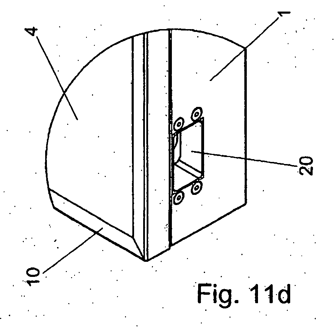

Figs. 11a, 11b, 11c and 11d illustrate a bracket 18 holding a pipe coupling 21 that serves to connect the tubing 3b to the outer tubing (not shown). The bracket 18 comprises a preferably plastic body that is secured to the inner side of the frame 1 by screws 19. The bracket 18 is provided with a substantially rectangular recess 20 in which the pipe coupling 21 is received. The recess 20 is upwardly open on the side of the bracket that faces the absorber. The pipe coupling 21 is inserted in the upwardly open part of the recess and secured in the recess by a locking plate 24. The pipe coupling 21 has a box-shaped section 22 that matches the rectangular recess 20 and a cylindrical section 23 that protrudes from the bracket 18 towards the absorber. The pipe coupling 21 is provided with a through-going bore 25. The part of the bore extending through the box-shaped section 22 is provided with and internal thread. The part of the bore extending through the cylindrical section 23 is dimensioned to receive an end of the tubing 3b therein. The tubing 3b is connected to the cylindrical section 23 by welding, soldering or other suitable technique. The internal thread in the bore in the box-shaped section 22 serves to receive the outer tubing (not shown), the extremity of which is provided with a matching thread. A substantial torque needs to be applied to secure the outer tubing tightly to the pipe coupling 18, due to sealing material being wound around the threaded extremity of the outer tubing. The sealing material, is compressed between the threads when the outer tubing is screwed into the pipe coupling, causing a relatively high torque to be applied in the process. The pipe coupling 18 is capable of resisting this torque since the box-shaped 22 section is tightly received in the rectangular recess 20 in the bracket 18 and prevents the pipe coupling 21 from rotating.

The bracket assembly can be used not only to the embodiment in which it is shown, but also to the embodiments shown in Figs. 1 to 10c.

Although the present invention has been described in detail for purpose of illustration, it is understood that such detail is solely for that purpose, and variations can be made therein by those skilled in the art without departing from the scope of the invention.

## Claims

1. A solar collector comprising:
an absorber (3), an insulating layer (2) beneath the absorber (3),
a cover pane (4) spaced above the absorber (3),
an outer frame (1) having side panels surrounding the periphery of the insulating layer (2),
**characterized in that**
the side panels are substantially shaped as a U-profile with an upper inwardly directed cover pane attachment ledge (1a) directed inwardly from said side panel and a lower inwardly directed ledge (1b),
said upper cover pane attachment ledge (1a) is provided with an upstanding rim (1c),
a continuous gasket (7) covers an upper edge of the rim (1c) and is placed between the upper edge of the rim (1c) and a first peripheral zone on the underside of the cover pane (4), and
said cover pane (4) is placed on said gasket (7) with the upstanding rim (1c) acting as a spacer for maintaining a distance between the upper pane attachment ledge (1a) and the cover pane (4), and
a continuous layer of flexible adhesive sealant (8) is arranged between a second peripheral zone on the underside of the cover pane (4) and an upper surface of the upper cover pane attachment ledge (1a) with the second peripheral zone surrounding the first peripheral zone.

2. A solar collector according to claim 1, wherein the continuous gasket (7) is provided on its outwardly facing side with a flexible dam (7a) to define a hollow space between the rim (1c) and the flexible dam itself.

3. A solar collector according to claim 2, wherein the continuous layer of flexible adhesive sealant (8) occupies the space between the upper cover pane attachment ledge (1c) and the cover pane (4) up to the flexible dam (7a).

4. A solar collector according to any of claims 1 to 3, wherein the continuous gasket (7) is in sealing abutment with the first peripheral zone of the bottom surface of the cover pane (4) to form a moisture barrier protecting the enclosure and to insulate the cover pane (4) thermally from the side panels.

5. A solar collector according to any of claims 1 to 4, wherein the continuous layer of flexible adhesive sealant (8) forms flexible layer that securely attaches the cover pane (4) to the side panels and also forms a second moisture barrier protecting the enclosure.

6. A solar collector according to any of claims 1 to 5, wherein the layer of flexible adhesive sealant (8) attaches the cover pane (4) to the side panels so that the cover pane (4) becomes an integral bearing part of the construction that contributes to the overall stability and stiffness of the solar collector.

7. A solar collector according to any of claims 1 to 6, wherein the combination of the continuous gasket (7) and the continuous layer of flexible adhesive sealant (8) forms a two stage barrier against undesired ingress of moisture.

8. A solar collector according to any of claims 1 to 7, wherein the continuous gasket (7) is provided on its outwardly facing side with a flexible dam (7a), defining a hollow space between said upstanding rim (1c) and said flexible dam (7a), and on its inwardly facing side with a flap (7b) extending over the insulation layer (2) and under the absorber (3).

9. A solar collector according to any of claims 2 to 8, wherein the flexible dam (7) serves as a barrier preventing liquid flexible adhesive sealant from entering the cavity when the layer of flexible adhesive (8) is applied in liquid form during construction of the solar collector.

10. A solar collector according to any of claims 1 to 9, wherein shear deformation of the layer of flexible adhesive sealant (8) compensates for differences in thermal expansion between the cover pane (4) and the frame (1).

## Patentansprüche

1. Sonnenkollektor, umfassend:
einen Absorber (3), eine Isolierschicht (2) unter dem Absorber (3),
eine Abdeckscheibe (4) in einem Abstand über dem Absorber (3),
einen äußeren Rahmen (1) mit Seitenplatten, welche die Peripherie der Isolierschicht (2) umgeben,
**dadurch gekennzeichnet, dass**
die Seitenplatten im Wesentlichen als ein U-Profil mit einer oberen, nach innen gerichteten Abdeckscheibenbefestigungsleiste (1a), die von der Seitenplatte nach innen gerichtet ist, und einer unteren, nach innen gerichteten Leiste (1b) geformt sind,
die obere Abdeckscheibenbefestigungsleiste (1a) mit einem nach oben stehenden Rand (1c) versehen ist,
eine durchgehende Dichtung (7) eine Oberkante des Randes (1c) bedeckt und zwischen der Oberkante des Randes (1c) und einem ersten peripheren Bereich an der Unterseite der Abdeckscheibe (4) angeordnet ist und
die Abdeckscheibe (4) auf der Dichtung (7) angeordnet ist, wobei der nach oben stehende Rand (1c) als ein Abstandhalter zum Aufrechterhalten eines Abstands zwischen der oberen Scheibenbefestigungsleiste (1a) und der Abdeckscheibe (4) fungiert, und
eine durchgehende Schicht aus flexiblem Dichtkleber (8) zwischen einem zweiten peripheren Bereich auf der Unterseite der Abdeckscheibe (4) und einer oberen Fläche der oberen Abdeckscheibenbefestigungsleiste (1a) angeordnet ist, wobei der zweite periphere Bereich den ersten peripheren Bereich umgibt.

2. Sonnenkollektor nach Anspruch 1, wobei die durchgehende Dichtung (7) auf ihrer nach außen weisenden Seite mit einem flexiblen Damm (7a) versehen ist, um einen Hohlraum zwischen dem Rand (1c) und dem flexiblen Damm selbst zu definieren.

3. Sonnenkollektor nach Anspruch 2, wobei die durchgehende Schicht aus flexiblem Dichtkleber (8) den Raum zwischen der oberen Abdeckscheibenbefestigungsleiste (1c) und der Abdeckscheibe (4) bis zu dem flexiblen Damm (7a) einnimmt.

4. Sonnenkollektor nach einem der Ansprüche 1 bis 3, wobei die durchgehende Dichtung (7) abdichtend an dem ersten peripheren Bereich der Unterseitenfläche der Abdeckscheibe (4) anliegt, um eine Feuchtigkeitssperre, welche die Umhüllung schützt, auszubilden und die Abdeckscheibe (4) thermisch von den Seitenplatten zu isolieren.

5. Sonnenkollektor nach einem der Ansprüche 1 bis 4, wobei die durchgehende Schicht aus flexiblem Dichtkleber (8) eine flexible Schicht ausbildet, welche die Abdeckscheibe (4) sicher an den Seitenplatten befestigt, und auch eine zweite Feuchtigkeitssperre ausbildet, welche die Umhüllung schützt.

6. Sonnenkollektor nach einem der Ansprüche 1 bis 5, wobei die Schicht aus flexiblem Dichtkleber (8) die Abdeckscheibe (4) an den Seitenplatten befestigt, so dass die Abdeckscheibe (4) ein integraler tragender Teil der Konstruktion wird, der zur Gesamtstabilität und -steifigkeit des Sonnenkollektors beiträgt.

7. Sonnenkollektor nach einem der Ansprüche 1 bis 6, wobei die Kombination aus der durchgehenden Dichtung (7) und der durchgehenden Schicht aus flexiblem Dichtkleber (8) eine zweistufige Sperre gegen ein unerwünschtes Eindringen von Feuchtigkeit ausbildet.

8. Sonnenkollektor nach einem der Ansprüche 1 bis 7, wobei die durchgehende Dichtung (7) auf ihrer nach außen weisenden Seite mit einem flexiblen Damm (7a), der einen Hohlraum zwischen dem nach oben stehenden Rand (1c) und dem flexiblen Damm (7a) definiert, und auf ihrer nach innen weisenden Seite mit einer Lasche (7b), die sich über der Isolierschicht (2) und unter dem Absorber (3) erstreckt, versehen ist.

9. Sonnenkollektor nach einem der Ansprüche 2 bis 8, wobei der flexible Damm (7) als eine Sperre dient, die verhindert, dass flüssiger flexibler Dichtkleber in den Hohlraum eindringt, wenn die Schicht aus flexiblem Kleber (8) während der Konstruktion des Sonnenkollektors in flüssiger Form aufgebracht wird.

10. Sonnenkollektor nach einem der Ansprüche 1 bis 9, wobei eine Scherverformung der Schicht aus flexiblem Dichtkleber (8) Unterschiede in der Wärmeausdehnung zwischen der Abdeckscheibe (4) und dem Rahmen (1) ausgleicht.

## Revendications

1. Capteur solaire comprenant :
un absorbeur (3), une couche d'isolation (2) sous l'absorbeur (3),
un panneau de couvercle (4) espacé au-dessus de l'absorbeur (3),
un cadre externe (1) comportant des panneaux latéraux qui entourent la périphérie de la couche d'isolation (2),
**caractérisé en ce que**
les panneaux latéraux sont conformés substantiellement comme un profil en U avec un rebord d'attachement supérieur (1a) de panneau de couvercle dirigé vers l'intérieur par rapport audit panneau latéral et un rebord inférieur (1b) dirigé vers l'intérieur,
ledit rebord d'attachement de panneau de couvercle supérieur (1a) est pourvu d'un contour redressé (1c),
un joint continu (7) recouvre une arrête supérieure du contour (1c) et est placé entre l'arrête supérieure du contour (1c) et une première zone périphérique sur le dessous du panneau de couvercle (4), et
ledit panneau de couvercle (4) est placé sur ledit joint (7) avec le contour redressé (1c) faisant office d'entretoise pour maintenir une distance entre le rebord d'attachement de panneau supérieur (1a) et le panneau de couvercle (4), et
une couche continue de mastic adhésif flexible (8) est agencée entre une deuxième zone périphérique sur le dessous du panneau de couvercle (4) et une surface supérieure du rebord d'attachement de panneau de couvercle supérieur (1a), la deuxième zone périphérique entourant la première zone périphérique.

2. Capteur solaire selon la revendication 1, dans lequel le joint continu (7) est pourvu sur son côté tourné vers l'extérieur d'une retenue flexible (7a) pour définir un espace creux entre le contour (1c) et la retenue flexible elle-même.

3. Capteur solaire selon la revendication 2, dans lequel la couche continue de mastic adhésif flexible (8) occupe l'espace entre le rebord d'attachement de panneau de couvercle supérieur (1c) et le panneau de couvercle (4) jusqu'à la retenue flexible (7a).

4. Capteur solaire selon l'une quelconque des revendications 1 à 3, dans lequel le joint continu (7) vient à butée étanche contre la première zone périphérique de la surface de fond du panneau de couvercle (4) pour former une barrière étanche à l'humidité qui protège l'enceinte et pour isoler thermiquement le panneau de couvercle (4) des panneaux latéraux.

5. Capteur solaire selon l'une quelconque des revendications 1 à 4, dans lequel la couche continue de mastic adhésif flexible (8) forme une couche flexible qui attache fermement le panneau de couvercle (4) aux panneaux latéraux et forme également une deuxième barrière étanche à l'humidité qui protège l'enceinte.

6. Capteur solaire selon l'une quelconque des revendications 1 à 5, dans lequel la couche de mastic adhésif flexible (8) attache le panneau de couvercle (4) aux panneaux latéraux de manière à ce que le panneau de couvercle (4) fasse intégralement partie de la construction qui contribue à la rigidité et à la solidité générale du capteur solaire.

7. Capteur solaire selon l'une quelconque des revendications 1 à 6, dans lequel la combinaison du joint continu (7) et de la couche continue du mastic adhésif flexible (8) forme une barrière à deux étages contre l'entrée indésirable d'humidité.

8. Capteur solaire selon l'une quelconque des revendications 1 à 7, dans lequel le joint continu (7) est pourvu sur son côté tourné vers l'extérieur d'une retenue flexible (7a) qui définit un espace creux entre ledit contour redressé (1c) et ladite retenue flexible (7a), et sur son côté tourné vers l'intérieur d'un rabat (7b) qui s'étend par-dessus la couche d'isolation (2) et sous l'absorbeur (3).

9. Capteur solaire selon l'une quelconque des revendications 2 à 8, dans lequel la retenue flexible (7) sert de barrière pour éviter l'entrée de mastic adhésif flexible liquide dans la cavité quand la couche d'adhésif flexible (8) est appliquée sous forme liquide durant la construction du capteur solaire.

10. Capteur solaire selon l'une quelconque des revendications 1 à 9, dans lequel la déformation par cisaillement de la couche de mastic adhésif flexible (8) compense les différences d'expansion thermique entre le panneau de couvercle (4) et le châssis (1).
